# EUROPÄISCHE PATENTSCHRIFT

(11) **EP 0 639 718 B1**
(45) Veröffentlichungstag und Bekanntmachung des Hinweises auf die Patenterteilung: **10.03.1999**
(21) Anmeldenummer: 94109349.4
(22) Anmeldetag: 17.06.1994
(51) Int. Cl.: F16B 11/00, E06B 3/96

(54) **Vorrichtung zur Verbindung von vorzugsweise aus Metall bestehenden Hohlprofilen**
Device for joining hollow profiles, preferably made of metal
Dispositif de raccordement pour profilés creux en métal

(30) Priorität: 03.07.1993 DE 4322236
(43) Veröffentlichungstag der Anmeldung: 22.02.1995
(73) Patentinhaber: NORSK HYDRO ASA, 0240 Oslo (NO)
(72) Erfinder: Schulz, Harald, 89358 Ettenbeuren (DE); Kern, Horstmar, 89073 Ulm (DE)
(74) Vertreter: Dziewior, Joachim

(56) Entgegenhaltungen:
- EP-A- 0 016 257
- DE-A- 2 018 791
- DE-A- 3 125 042

## Beschreibung

Die Erfindung betrifft eine Vorrichtung zur Verbindung von vorzugsweise aus Metall bestehenden Hohlprofilen, auch in Form von Rohren, inbes. zur Rahmenherstellung für Fenster, Türen, Fassaden oder dergl., mit einem in die Hohlprofile greifenden Verbindungselement, insbes. einem Eckverbinder, das an einer oder mehreren seiner den zu verbindenden Hohlprofilen innenseitig anliegenden Verbindungsflächen einen mit Klebstoff versehenen Bereich aufweist.

Eine Vorrichtung der genannten Art zur Verbindung von Hohlprofilen ist beispielsweise aus der DE 31 25 042 bekannt. Bei der dort beschriebenen Verbindungsvorrichtung werden die Verbindungsflächen des Eckverbinders vor der Montage der Eckverbindung vollständig oder teilweise mit einer Klebstoffbeschichtung versehen, die aus einem Schmelzkleber besteht, der unmittelbar auf die Verbindungsfläche des Verbinders aufgetragen wird oder als Klebefolie ausgebildet ist.

Die Aufbringung der Klebstoffbeschichtung in der beschriebenen Weise ist nicht nur zeitlich aufwendig, sondern erlaubt darüber hinaus nur das Einbringen geringer Klebstoffmengen, die häufig nicht ausreichend sein können, um eine ausreichend stabile Klebverbindung zu gewährleisten.

Weiter ist aus der EP-A-016 257 ein Verbinder zum Aufbauen von Hohlrohrrahmengestellen für die elektrische Nachrichtentechnik bekannt, bei dem die in die Hohlrohre greifenden Stutzen mit Kleberinnen versehen sind. Diese Kleberinnen bestehen aus mindestens einer an der Oberfläche der Stutzen umlaufenden zentrischen Rinne, von der aus Stichgräben weggeführt sind. Hierdurch soll erreicht werden, daß beim Einspritzen des Klebers in die Kleber inne bei fertig montiertem Verbinder durch in den Hohlrohren vorgesehene Bohrungen hindurch eine gleichmäßigere Verteilung des Klebers erreicht wird, insbesondere Lufteinschlüsse weitgehend vermieden werden. Nachteilig ist hierbei zunächst, daß in die Hohlrohre Bohrungen eingebracht werden müssen, was bei Gestellen für die elektrische Nachrichtentechnik ohne weiteres machbar, bei Fenster- oder Türrahmen jedoch oft - schon aus ästhetischen Gründen - nicht tolerierbar ist. Im übrigen bleibt nach wie vor die Ungewissheit, ob eine ausreichende Benetzung der miteinander zu verbindenden Flächen durch den Kleber stattgefunden hat, zumal der Kleber beim Einspritzen - der Schwerkraft folgend - zunächst nach unten abfließt.

Aus der DE-A-20 18 791 ist schließlich ein Hilfsmittel zum Verkleben von Steckverbindungen bekannt, das zur Einbringung von Klebstoff in die Verbindungsbereiche aus dünnmaschigen, leicht zerbrech- bzw. zerdrückbaren Röhrchen besteht, die einen fließfähigen Klebstoff enthalten und an ihren Enden verschlossen sind.

Der Erfindung liegt die Aufgabe zugrunde, eine Vorrichtung der eingangs genannten Art zu schaffen, die eine schnellere, wirtschaftlichere und sichere, darüber hinaus auch umweltfreundliche Verbindung der Hohlprofile bei Vermeidung von Abfall und einer Reduktion von Schadstoffen ermöglicht.

Diese Aufgabe wird nach der Erfindung dadurch gelöst, daß das Verbindungselement an den zu verklebenden Verbindungsflächen mit Aufnahmetaschen für den Klebstoff versehen ist, in denen der Klebstoff bei der Montage des Verbindungselements in auf einem Träger aufgebrachter oder in gekapselter Form als Kleberkissen angeordnet ist, wobei die Aufnahmetaschen sich quer zur Einschubrichtung des Verbindungselements erstrecken.

Der durch die Erfindung erreichte Vorteil besteht zunächst darin, daß durch die Form und Größe der Aufnahmetaschen die für die Klebeverbindung benötigte Klebstoffmenge entsprechend der jeweils geforderten Festigkeit in weitem Umfang eingestellt werden kann. Weiter besteht der Vorteil, daß eine Beschichtung der zu verklebenden Flächen entfällt, da der Klebstoff - bei entsprechender Konfektionierung - lediglich in die Aufnahmetaschen eingebracht bzw. eingelegt werden muß. Das in der Regel zeitaufwendige Auftragen von bzw. Beschichten mit Klebstoff sowie die damit evtl. verbundenen gesundheitlichen Schädigungen entfallen hierdurch.

Die Aufnahmetasche erstreckt sich beidseits bis zum Rand der Verbindungsfläche. Damit wird eine Klebstoffabgabe über die gesamte Breite der Verbindungsfläche erreicht. Der Klebstoff ist vorteilhafterweise formschlüssig in der Aufnahmetasche angeordnet und schließt mit der Verbindungsfläche bündig ab oder aber steht über diese hinaus. Im letzteren Fall wird der Klebstoff bereits beim Einschieben des Verbindungselements in das Hohlprofil verteilt, während bei der erstgenannten Ausgestaltung der Klebstoff erst durch einen nachfolgenden Verfahrensschritt, etwa eine Wärmebehandlung, aus der Aufnahmetasche austritt.

Um den Klebstoff beim Einschieben des Verbindungselements in das Hohlprofil zu fixieren, empfiehlt es sich, daß die quer zur Einschubrichtung des Verbindungselements verlaufenden Ränder der Aufnahmetasche hinterschnitten sind.

In einer ersten vorteilhaften Ausgestaltung kann die Aufnahmetasche eine im wesentlichen kreisförmige Querschnittsfläche aufweisen, so daß die Verwendung von stangenförmigem Klebstoff möglich ist. Es besteht jedoch ebenso die Möglichkeit, daß die Aufnahmetasche als flache Wanne ausgebildet ist, in die der Klebstoff in kissenförmiger Gestalt eingelegt wird. Um dann das Herausfallen des Klebstoffs aus der Aufnahmetasche zu verhindern, empfiehlt es sich, daß die Aufnahmetasche an ihrem in Einschubrichtung vorderen Rand eine Aufnamhmenut zum Einhängen des Kleberkissens oder einer das Kleberkissen tragenden Stützleiste aufweist. Um einen sicheren Halt des Kleberkissens bzw. der Stützleiste zu gewährleisten, kann die Aufnahmenut im Querschnitt gesehen bogenförmig verlaufen. Es besteht jedoch auch die vorteilhafte Möglichkeit, daß die Aufnamhenut als Aufnahmeschlitz ausgebildet ist, der parallel zur Verbindungsfläche ausgerichtet ist und zur Stirnseite des Verbindungselements hin mündet.

Ferner besteht auch die Möglichkeit, daß in Einschubrichtung des Verbindungselements mehrere Aufnahmetaschen hintereinander angeordnet sind. Die Aufnahmetaschen können hierbei in einer vorteilhaften Ausgestaltung eine schuppenartige wellenförmige oder ähnliche Struktur aufweisen, wobei die bei schuppenartiger Struktur zwischen den Aufnahmetaschen gebildeten Vorsprünge entgegen gesetzt zur Einschubrichtung weisen. Hierdurch ist sichergestellt, daß sich das Verbindungselement ohne große Reibungskräfte in das Hohlprofil einschieben läßt.

Soweit der Klebstoff in einem Kleberkissen angeordnet ist, das nicht zum selbsttätigen Öffnen bzw. Aufreißen beim Einschieben des Verbindungselements eingerichtet ist, kann im Verbindungselement ein sich quer erstreckender, in die Aufnahmetasche mündender Stift angeordnet sein, der von der der Aufnahmetasche abgewandten Seite in diese hinein axial verstellbar ist. Der Betätigung des Stifts kann von der Außenseite des Hohlprofils über eine Bohrung oder mittelbar durch Einbringen einer Einprägung in das Hohlprofil erfolgen.

Der zur Anwendung kommende Klebstoff kann beispielsweise von einem bei Raumtemperatur reagierenden Einkomponentensystem, insbes. einem unter Feuchtigkeit vernetzenden oder einem lösungsmittelhaltigen oder einem anaeroben oder einem cyanacrylathaltigen System gebildet sein. Weiter besteht die Möglichkeit, daß der Klebstoff von einem bei Raumtemperatur reagierenden Zweikomponentensystem, insbes. einem Epoxid- oder PUR-System mit variablem Mischungsverhältnis gebildet ist. Schließlich kann der Klebstoff auch von einer heißhärtenden Epoxi-Folie oder einem mikroverkapselten Kleber oder einem Acrylat-System oder einem Heißkleber gebildet sein.

Soweit der Klebstoff in einem Kleberkissen angeordnet ist, sieht die Erfindung vor, daß das Kleberkissen eine Kunststoffummantelung aufweist. Dabei besteht insbes. die Möglichkeit, daß das Kleberkissen eine keilförmige, in Einschubrichtung des Verbindungselements sich verbreiternde Querschnittsform aufweist. Weiter kann das Kleberkissen eine die beiden Komponenten des Zweikomponentenklebers trennende Zwischenfolie aufweisen. Die Zwischenfolie kann vorteilhafterweise kreisförmige oder kammartige, den Kleberübertritt ermöglichende bzw. erleichternde Zonen aufweisen.

Ebenso besteht auch die Möglichkeit, daß das Kleberkissen von einem mit dem Klebstoff getränkten Filz gebildet ist. Je nach Anwendungsfall kann es auch von Vorteil sein, wenn der Klebstoff auf eine einen Träger bildende Aluminium-Folie aufgebracht ist.

Eine weitere vorteilhafte Ausführungsform ist dadurch gekennzeichnet, daß der Klebstoff durch elektrischen Stromfluß aufheizbar ist. Dies kann insbes. in der Weise erfolgen, daß im Klebstoff eine Heizdrahtseele angeordnet ist.

Die Kleberkissen sind zweckmäßigerweise zu mehreren in quadratischer Form auf einer gemeinsamen Trägerfolie durch trennbare Verbindungsstege beabstandet angeordnet. Dabei ist es möglich, daß zur Aufnahme eines Zweikomponentenklebers die Zwischenfolie in den Kleberkissen in der Ebene der Trägerfolie verläuft. Ebenso besteht jedoch auch die Möglichkeit, daß zur Aufnahme eines Zweikomponentenklebers die Kleberkissen wechselweise mit der einen bzw. der anderen Kleberkomponente gefüllt sind. In diesem Fall werden zwei aneinandergrenzende Kleberkissen abgetrennt und zusammengefaltet, so daß die beiden Kissen aufeinander zu liegen kommen.

Soweit das Verbindungselement, insbes. der Eckverbinder, durch Ablängen von entsprechend geformter Stangenware gebildet ist, kann im Rahmen der Erfindung vorgesehen sein, daß der Klebstoff bereits vor dem Ablängen auf die Stangenware aufgebracht ist.

Im folgenden wird die Erfindung an zahlreichen in der Zeichnung dargestellten Ausführungsbeispielen erläutert; es zeigen:
- Fig. 1: einen Querschnitt durch ein nur teilweise dargestelltes, auf Gehrung geschnittenes Hohlprofil mit einem Verbindungselement in Form eines Eckverbinders, der mit in Aufnahmetaschen angeordneten Kleberkissen versehen ist,
- Fig. 2: mehrere auf einer gemeinsamen Folie angeordnete Kleberkissen,
- Fig. 3: eine andere Anordnung von Kleberkissen in Draufsicht,
- Fig. 4: die Teilansicht eines Eckwinkels mit keilförmigem Kleberkissen,
- Fig. 5: die Ausführung eines Kleberkissens für Zweikompentenkleber in der Fig. 4 entsprechender Darstellung,
- Fig. 6 und 7: mögliche Ausgestaltungen der die beiden Komponenten trennenden Zwischenfolie,
- Fig. 8 bis 12: weitere Ausführungsformen des Klebers bzw. des Kleberkissens,
- Fig. 13: ein aus Filz bestehendes Kleberkissen mit einem Zweikomponentenkleber,
- Fig. 14: auf einer Trägerfolie angeordnete Kleberkissen mit einem Zweikomponentensystem,
- Fig. 15: eine Ausführungsvariante eines Kleberkissens mit Zweikomponentensystem,
- Fig. 16: ein zur Anwendung vorbereitetes einzelnes Kleberkissen nach Fig. 15,
- Fig. 17 und 18: Möglichkeiten zum Ausdrücken des Klebers aus dem Kleberkissen,
- Fig. 19: mit Kleber beschichtete Stangenware für die Herstellung von Eckverbindern,
- Fig. 20: einen nur teilweise wiedergegebenen Eckverbinder mit schuppenartigen Aufnahmetaschen und mikroverkapseltem Kleber.

Die in der Zeichnung dargestellte Vorrichtung dient zur Verbindung von vorzugsweise aus Metall bestehenden Hohlprofilen 1 und dient insbes. zur Herstellung von Rahmen für Fenster, Türen, Fassaden oder dergl. Sie weist im einzelnen ein in die Hohlprofile 1 greifendes Verbindungselement 2 auf, das ganz allgemein langgestreckt, T-förmig oder auch - wie in den Ausführungsbeispielen - winkelförmig als Eckverbinder ausgebildet sein kann.

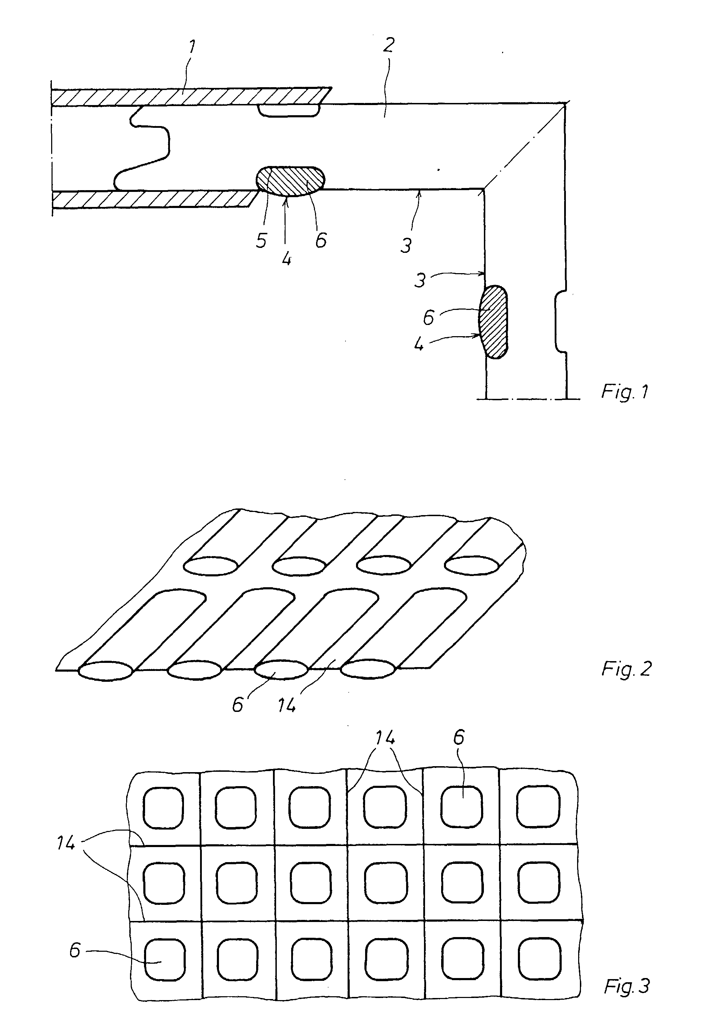

Das Verbindungselement 2 weist an einer oder mehreren seiner den zu verbindenden Hohlprofilen 1 innenseitig anliegenden Verbindungsflächen 3 eine Beschichtung aus Klebstoff 4 auf. Dazu ist das Verbindungselement 2 an den zu verklebenden Verbindungsflächen 3 mit Aufnahmetaschen 5 für den Klebstoff 4 versehen, in denen der Klebstoff 4 bei der Montage des Verbindungselements 2 in offener, in auf einem Träger aufgebrachter oder in gekapselter Form als Kleberkissen 6 angeordnet ist. Eine Ausführungsform mit Kleberkissen 6 ist in der Fig. 1 wiedergegeben. Die Aufnahmetasche 5 erstreckt sich dort quer zur Einschubrichtung des Verbindungselements 2 beidseitig jeweils bis zum Rand der Verbindungsfläche 3. Der Klebstoff 4 ist formschlüssig in der Aufnahmetasche 5 angeordnet und kann entweder bündig mit der Verbindungsfläche 3 abschließen, wenn beispielsweise der Klebvorgang erst nach vollständigem Einschieben des Verbindungselements 2 in das Hohlprofil 1 eingeleitet werden soll. Der Klebstoff 4 kann jedoch auch über die Aufnahmetasche 5 hinausstehen, so daß bereits beim Einschieben des Verbindungselements 2 in das Hohlprofil 1 eine Verteilung zumindest des über die Verbindungsfläche 3 hinausstehenden Klebstoffs 4 erfolgt.

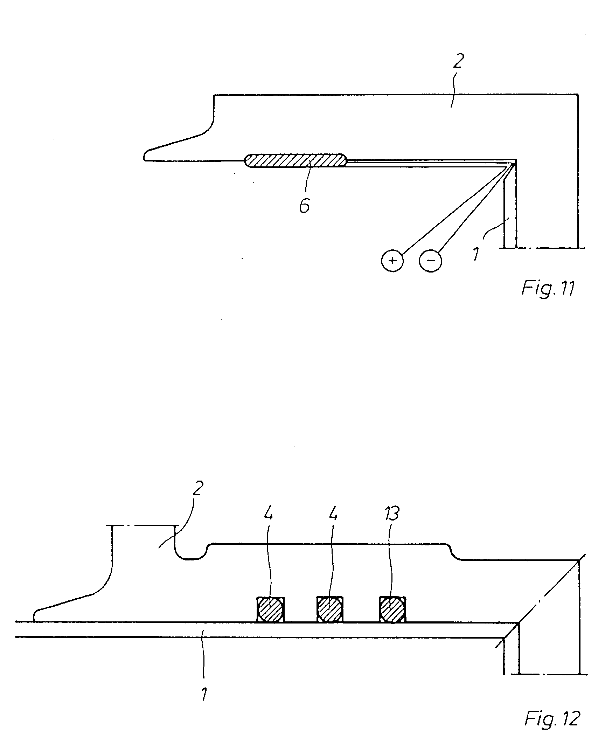

Die Aufnahmetasche 5 kann, wie in Fig. 12 dargestellt, eine im wesentlichen rechteckige Querschnittsfläche zur Aufnahme von stangenförmig ausgebildetem Kleber aufweisen. In dem Ausführungsbeispiel etwa nach Fig. 1 dagegen ist die Aufnahmetasche 4 als flache Wanne ausgebildet.

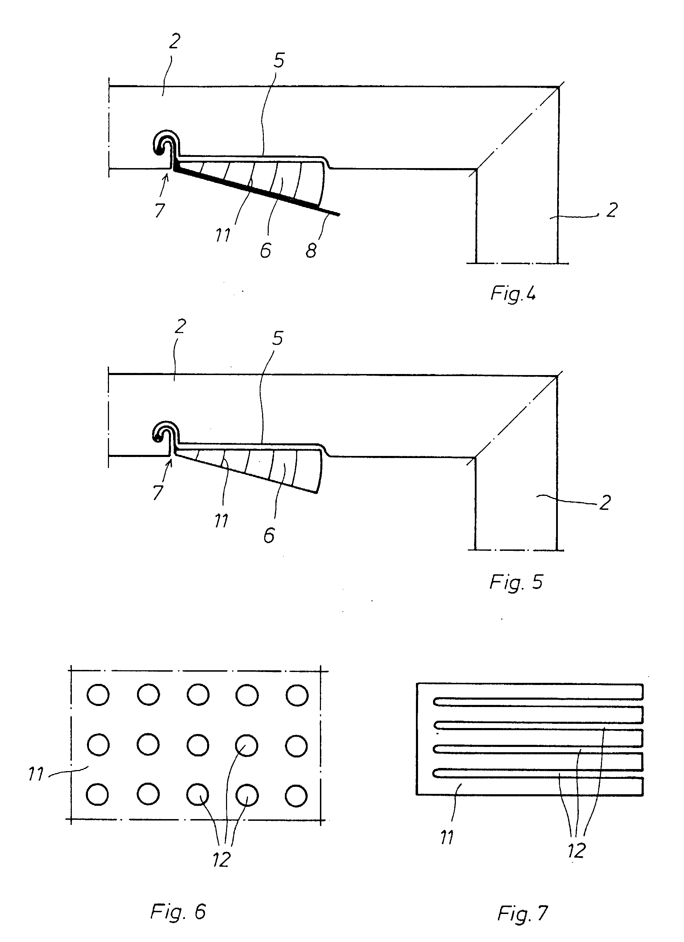

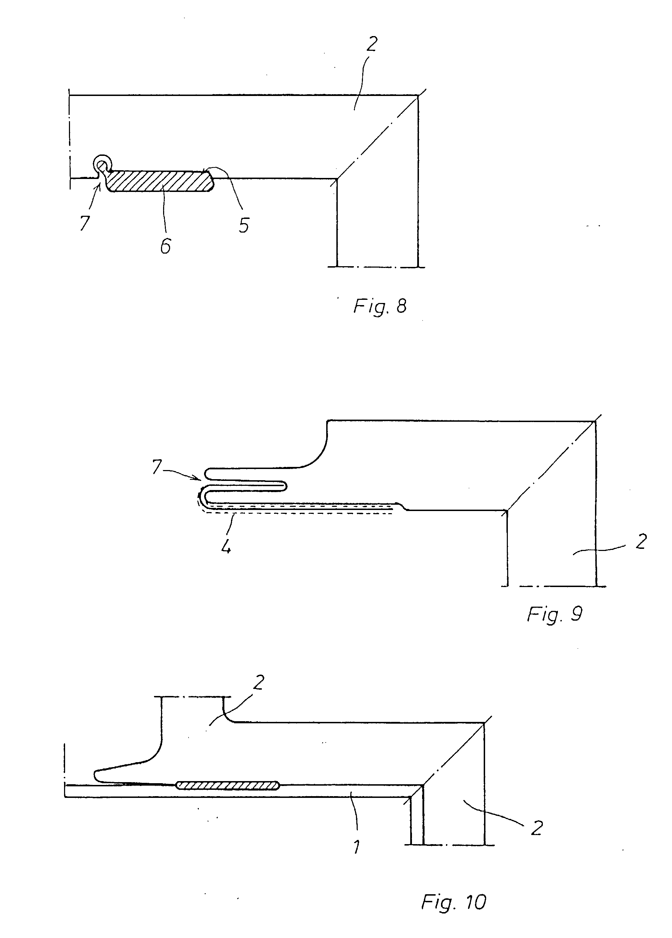

In den Ausführungsbeispielen nach den Fig. 4 und 5 weist die Aufnahmetasche 5 an ihrem in Einschubrichtung vorderen Rand eine Aufnahmenut 7 auf, die zum Einhängen entweder des Kleberkissens 6 selbst oder aber einer das Kleberkissen 6 tragenden Stützleiste 8 vorgesehen ist. Um hier ausreichenden Halt zu bieten, verläuft die Aufnahmenut 7 im Querschnitt gesehen bogenförmig. In Fig. 9 ist die Aufnahmenut 7 als Aufnahmeschlitz ausgebildet, der parallel zur Verbindungsfläche 3 ausgerichtet ist und zur Stirnseite des Verbindungselements 2 hin mündet.

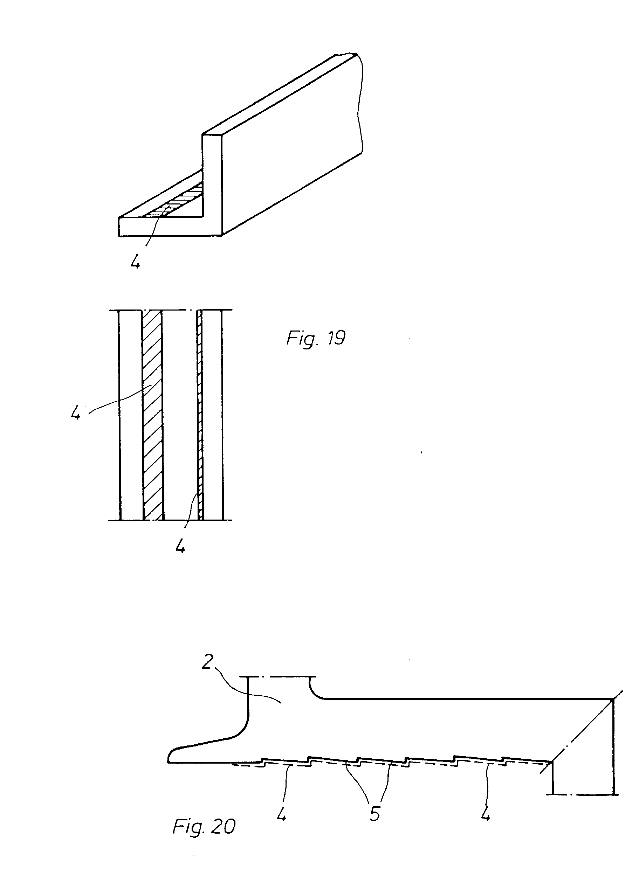

In Einschubrichtung des Verbindungselements 2 können entweder eine einzelne Aufnahmetasche 5, wie in Fig. 1 dargestellt, oder deren mehrere, etwa gemäß Fig. 12 oder 20, vorgesehen sein. Bei letzterer weisen die Aufnahmetaschen 5 eine schuppenartige Struktur auf, wobei die zwischen den Aufnahmetaschen 5 gebildeten Vorsprünge entgegen gesetzt zur Einschubrichtung weisen. Die Vorsprünge erzeugen einen ausreichenden Druck zum Öffnen der aus einer Mikroverkapselung bestehenden Kleberbeschichtung. Da die gesamte Flächenanlage hierbei gering ist, werden zum Einschieben des Verbindungselements 2 keine großen Kräfte erforderlich.

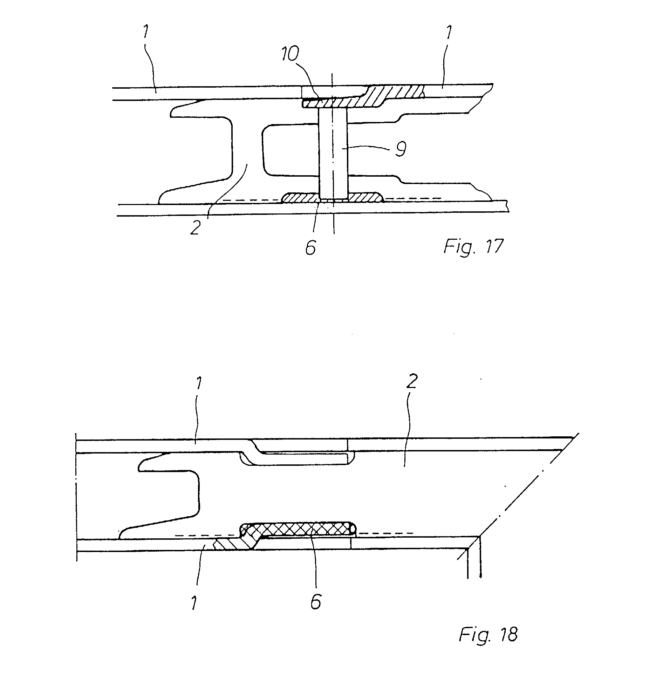

Zum Öffnen des Kleberkissens 6 kann gemäß Fig. 17 ein quer sich im Verbindungselement 2 erstreckender Stift 9 vorgesehen sein, der in die Aufnahmetasche 5 hinein mündet. Dieser Stift 9 kann von der Außenseite des Hohlprofils 1 entweder durch eine Bohrung hindurch oder aber beim Einprägen einer Zunge 10 in eine Sicke des Verbindungselements 2 in die Aufnahmetasche 5 hineinverstellt werden und dabei das Kleberkissen 6 öffnen. Das Öffnen und Auspressen des Klebers aus dem Kleberkissen 6 kann jedoch auch durch beidseitiges Prägen des Hohlprofils 1 erfolgen, wie dies in Fig. 18 angedeutet ist.

Als Klebstoff 4 eignen sich bei Raumtemperatur reagierende Einkomponentensysteme, insbes. unter Feuchtigkeit vernetzende oder lösungsmittelhaltige oder anaerobe oder cyanacrylathaltige Systeme. Ebenso eignen sich bei Raumtemperatur reagierende Zweikomponentensysteme, insbes. Epoxid- oder PUR-Systeme mit variablem Mischungsverhältnis. Schließlich können als Klebstoff 4 auch heißhärtende Epoxi-Folien oder mikroverkapselte Kleber oder Acrylatsysteme oder auch Heißkleber Verwendung finden.

Das Kleberkissen 6 weist - insbes. für flüssige Klebstoffe - eine Kunststoffummantelung auf. Diese Kunststoffummantelung kann so gewählt sein, daß sie entweder bereits beim Einschieben des Verbindungselements 2 in das Hohlprofil 1 aufreißt oder aber erst nachträglich durch Kraft- oder Wärmeeinwirkung zerstört wird. Um ein Aufreißen des Kleberkissens 6 und Auspressen des Klebstoffs 4 bereits beim Einschieben des Verbindungselements 2 in das Hohlprofil 1 zu erreichen, kann das Kleberkissen 6 - wie in den Fig. 4 und 5 dargestellt - eine keilförmige, in Einschubrichtung des Verbindungselements 2 sich verbreiternde Querschnittsform aufweisen. Soweit das Kleberkissen 6 einen Zweikomponentenkleber aufnimmt, ist eine die beiden Komponenten trennende Zwischenfolie 11 vorgesehen. Diese Zwischenfolie 11 kann gemäß Fig. 6 und 7 kreisförmige oder kammartige, den Kleberübertritt ermöglichende bzw. erleichternde Zonen 12 aufweisen. In Fig. 8 besteht das Kleberkissen 6 aus einem mit dem Klebstoff 4 getränkten Filz, aus welchem der Klebstoff 4 beim Einschieben des Verbindungselements 2 in das Hohlprofil 1 ausgepreßt wird. Dieser Filz kann dabei zunächst von einer Folie, z. B. aus Aluminium, umschlossen sein, die beim Einschieben des Verbindungselements 2 aufreißt. Es besteht jedoch auch die Möglichkeit, daß der Klebstoff 4 direkt auf eine einen Träger bildende Aluminium-Folie aufgebracht ist, wie dies in Fig. 9 angedeutet ist.

In dem Ausführungsbeispiel nach Fig. 11 ist eine Möglichkeit zur Verarbeitung beispielsweise eines thermoplastischen Klebstoffs 4 angedeutet, der durch elektrischen Stromfluß aufgeheizt wird. Dabei können entweder in den Klebstoff 4 Partikel eingebracht sein, die diesem eine gewisse Leitfähigkeit vermitteln, so daß der Stromfluß direkt durch den Klebstoff 4 erfolgt. Es besteht jedoch auch die in Fig. 12 dargestellte Möglichkeit, insbes. bei einem stangenförmigen Klebstoff 4 diesen mit einer Heizdrahtseele 13 zu versehen, über die die Erwärmung des Klebstoffs 4 erfolgt. Selbstverständlich kann grundsätzlich eine Erwärmung auch durch Wärmezufuhr von außen erfolgen.

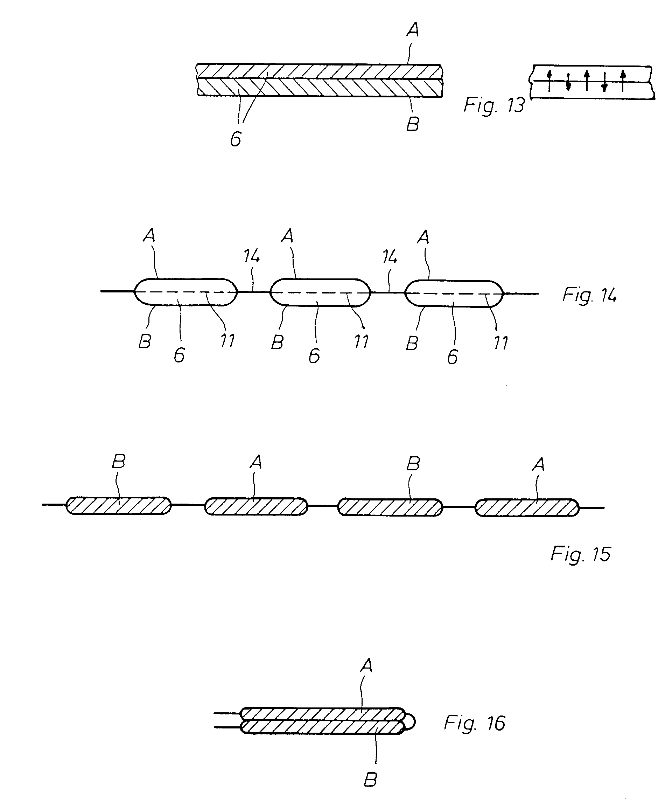

In den Fig. 13 bis 16 sind mehrere Möglichkeiten dargestellt, die Kleberkissen 6 zu mehreren in quadratischer Form auf einer gemeinsamen Trägerfolie durch trennbare Verbindungsstege 14 beabstandet anzuordnen. Die Kleberkissen 6 können hiervon einzeln abgerissen oder abgeschnitten werden. Soweit die Kleberkissen 6 mit einem Zweikomponentenkleber befüllt sind, verläuft die Zwischenfolie 11 in den Kleberkissen 6 in der Ebene der Trägerfolie, wie dies in Fig. 14 dargestellt ist. In Fig. 15 sind die Kleberkissen 6 immer wechselweise mit der einen und der anderen Komponente A, B befüllt. Hier werden jeweils zwei aneinander grenzende Kleberkissen 6 abgetrennt und zur Anwendung in die in Fig. 16 dargestellte Form gebracht. In Fig. 13 sind die beiden Komponenten A, B eines Zweikomponentenklebers jeweils in einem Filzstreifen angeordnet, die beide von zwei getrennten oder einer gemeinsamen Rolle abgerollt und zur gegenseitigen Anlage gebracht werden. Eine Durchtränkung der beiden Komponenten erfolgt durch Zusammenpressen der aufeinander gelegten Filzstreifen, wie dies durch die Pfeile im rechten Teil der Fig. 13 angedeutet ist.

Soweit das Verbindungselement 2, hier also der Eckverbinder, durch Ablängen von entsprechend geformter, in der Fig. 19 andeutungsweise wiedergegebener Stangenware gebildet ist, kann der Klebstoff 4 bereits vor dem Ablängen auf die Stangenware aufgebracht sein. Dies ermöglicht eine weitere Vereinfachung bei der Herstellung sowie bei der Verarbeitung der Verbindungsteile.

## Patentansprüche

1. Vorrichtung zur Verbindung von vorzugsweise aus Metall bestehenden Hohlprofilen (1), auch in Form von Rohren, insbesondere zur Rahmenherstellung für Fenster, Türen, Fassaden oder dergleichen, mit einem in die Hohlprofile (1) greifenden Verbindungselement (2), insbesondere einem Eckverbinder, das an einer oder mehreren seiner den zu verbindenden Hohlprofilen (1) innenseitig anliegenden Verbindungsflächen (3) einen mit Klebstoff versehenen Bereich aufweist, dadurch gekennzeichnet, daß das Verbindungselement (2) an den zu verklebenden Verbindungsflächen (3) mit Aufnahmetaschen (5) für den Klebstoff (4) versehen ist, in denen der Klebstoff (4) bei der Montage des Verbindungselements (2) in auf einem Träger aufgebrachter oder in gekapselter Form als Kleberkissen (6) angeordnet ist, wobei die Aufnahmetaschen (5) sich quer zur Einschubrichtung des Verbindungselements (2) erstrecken.

2. Vorrichtung nach Anspruch 1, dadurch gekennzeichnet, daß die Aufnahmetasche (5) sich beidseits bis zum Rand der Verbindungsfläche (3) erstreckt.

3. Vorrichtung nach Anspruch 1 oder 2, dadurch gekennzeichnet, daß der Klebstoff (4) formschlüssig in der Aufnahmetasche (5) angeordnet ist und mit der Verbindungsfläche (3) bündig abschließt oder über diese hinaussteht.

4. Vorrichtung nach einem der Ansprüche 1 bis 3, dadurch gekennzeichnet, daß die quer zur Einschubrichtung des Verbindungselements (2) verlaufenden Ränder der Aufnahmetasche (5) hinterschnitten sind.

5. Vorrichtung nach einem der Ansprüche 1 bis 4, dadurch gekennzeichnet, daß die Aufnahmetasche (5) eine im wesentlichen kreisförmige Querschnittsfläche aufweist.

6. Vorrichtung nach einem der Ansprüche 1 bis 4, dadurch gekennzeichnet, daß die Aufnahmetasche (5) als flache Wanne ausgebildet ist.

7. Vorrichtung nach Anspruch 6, dadurch gekennzeichnet, daß die Aufnahmetasche (5) an ihrem in Einschubrichtung vorderen Rand eine Aufnahmenut (7) zum Einhängen des Kleberkissens (6) oder einer das Kleberkissen (6) tragenden Stützleiste (8) aufweist.

8. Vorrichtung nach Anspruch 7, dadurch gekennzeichnet, daß die Aufnahmenut (7) im Querschnitt gesehen bogenförmig verläuft.

9. Vorrichtung nach Anspruch 7, dadurch gekennzeichnet, daß die Aufnahmenut (7) als Aufnahmeschlitz ausgebildet ist, der parallel zur Verbindungsfläche (3) ausgerichtet ist und zur Stirnseite des Verbindungselements (2) hin mündet.

10. Vorrichtung nach einem der Ansprüche 1 bis 9, dadurch gekennzeichnet, daß in Einschubrichtung des Verbindungselements (2) mehrere Aufnahmetaschen (5) hintereinander angeordnet sind.

11. Vorrichtung nach Anspruch 10, dadurch gekennzeichnet, daß die Aufnahmetaschen (5) eine schuppenartige, wellenförmige oder ähnliche Struktur aufweisen, wobei die bei schuppenartiger Struktur zwischen den Aufnahmetaschen (5) gebildeten Vorsprünge entgegengesetzt zur Einschubrichtung weisen.

12. Vorrichtung nach einem der Ansprüche 1 bis 11, dadurch gekennzeichnet, daß im Verbindungselement (2) ein sich quer erstreckender, in die Aufnahmetasche (5) mündender Stift (9) angeordnet ist, der von der der Aufnahmetasche (5) abgewandten Seite in diese hinein axial verstellbar ist.

13. Vorrichtung nach einem der Ansprüche 1 bis 12, dadurch gekennzeichnet, daß der Klebstoff (4) von einem bei Raumtemperatur reagierenden Einkomponentensystem, insbesondere einem unter Feuchtigkeit vernetzenden oder einem lösungsmittelhaltigen oder einem anaeroben oder einem cyanacrylathaltigen System gebildet ist.

14. Vorrichtung nach einem der Ansprüche 1 bis 12, dadurch gekennzeichnet, daß der Klebstoff (4) von einem bei Raumtemperatur reagierenden Zweikomponentensystem, insbesondere einem Epoxid- oder PUR-System mit variablem Mischungsverhältnis gebildet ist.

15. Vorrichtung nach einem der Ansprüche 1 bis 12, dadurch gekennzeichnet, daß der Klebstoff (4) von einer heißhärtenden Epoxi-Folie oder einem mikroverkapselten Kleber oder einem Acrylat-System oder einem Heißkleber gebildet ist.

16. Vorrichtung nach einem der Ansprüche 1 bis 15, dadurch gekennzeichnet, daß das Kleberkissen (6) eine Kunststoffummantelung aufweist.

17. Vorrichtung nach einem der Ansprüche 1 bis 16, dadurch gekennzeichnet, daß das Kleberkissen (6) eine keilförmige, in Einschubrichtung des Verbindungselements (2) sich verbreiternde Querschnittsform aufweist.

18. Vorrichtung nach Anspruch 16 oder 17, dadurch gekennzeichnet, daß das Kleberkissen (6) eine die beiden Komponenten eines Zweikomponentenklebers trennende Zwischenfolie (11) aufweist.

19. Vorrichtung nach Anspruch 18, dadurch gekennzeichnet, daß die Zwischenfolie (11) kreisförmige oder kammartige, den Kleberübertritt ermöglichende bzw. erleichternde Zonen (12) aufweist.

20. Vorrichtung nach einem der Ansprüche 1 bis 14, dadurch gekennzeichnet, daß das Kleberkissen (6) von einem mit dem Klebstoff (4) getränkten Filz gebildet ist.

21. Vorrichtung nach einem der Ansprüche 1 bis 14, dadurch gekennzeichnet, daß der Klebstoff (4) auf eine einen Träger bildende Aluminium-Folie aufgebracht ist.

22. Vorrichtung nach einem der Ansprüche 1 bis 14, dadurch gekennzeichnet, daß der Klebstoff (4) durch elektrischen Stromfluß aufheizbar ist.

23. Vorrichtung nach Anspruch 22, dadurch gekennzeichnet, daß im Klebstoff (4) eine Heizdrahtseele (13) angeordnet ist.

24. Vorrichtung nach einem der Ansprüche 1 bis 19, dadurch gekennzeichnet, daß die Kleberkissen (6) zu mehreren in quadratischer Form auf einer gemeinsamen Trägerfolie durch trennbare Verbindungsstege (14) beabstandet angeordnet sind.

25. Vorrichtung nach Anspruch 24, dadurch gekennzeichnet, daß zur Aufnahme eines Zweikomponentenklebers die Zwischenfolie (11) in den Kleberkissen (6) in der Ebene der Trägerfolie verläuft.

26. Vorrichtung nach Anspruch 24, dadurch gekennzeichnet, daß zur Aufnahme eines Zweikomponentenklebers die Kleberkissen (6) wechselweise mit der einen bzw. mit der anderen Kleberkomponente (A, B) gefüllt sind.

27. Vorrichtung nach einem der Ansprüche 1 bis 15, bei welcher das Verbindungselement 2, insbesondere der Eckverbinder, durch Ablängen von entsprechend geformter Stangenware gebildet ist, dadurch gekennzeichnet, daß der Klebstoff (4) bereits vor dem Ablängen auf die Stangenware aufgebracht ist.

## Claims

1. A device for connecting hollow members (1) preferably comprising metal, also in the form of tubes, in particular for frame production for windows, doors, facades or the like, having a connecting element (2), in particular a corner connector, which engages into the hollow members (1) and which has a region provided with adhesive at one or more of its connecting surfaces (3) which bear at the inside against the hollow members (1) to be connected, characterised in that at the connecting surfaces (3) to be glued the connecting element (2) is provided with receiving pockets (5) for the adhesive (4) in which, upon mounting of the connecting element (2), the adhesive (4) is arranged in the form of being applied to a carrier or in encapsulated form as an adhesive pad (6), wherein the receiving pockets (5) extend transversely with respect to the direction of insertion of the connecting element (2).

2. A device according to claim 1 characterised in that the receiving pocket (5) extends on both sides to the edge of the connecting surface (3).

3. A device according to claim 1 or claim 2 characterised in that the adhesive (4) is arranged in positively locking relationship in the receiving pocket (5) and terminates flush with the connecting surface (3) or projects beyond same.

4. A device according to one of claims 1 to 3 characterised in that the edges of the receiving pocket (5), which extend transversely with respect to the direction of insertion of the connecting element (2), are undercut.

5. A device according to one of claims 1 to 4 characterised in that the receiving pocket (5) has a substantially circular cross-sectional area.

6. A device according to one of claims 1 to 4 characterised in that the receiving pocket is in the form of a shallow trough.

7. A device according to claim 6 characterised in that at its edge which is the leading edge in the direction of insertion the receiving pocket (5) has a receiving groove (7) for hanging therein the adhesive pad (6) or a support strip (8) carrying the adhesive pad (6).

8. A device according to claim 7 characterised in that the receiving groove (7) extends in an arcuate configuration as viewed in cross-section.

9. A device according to claim 7 characterised in that the receiving groove (7) is in the form of a receiving slot which is oriented parallel to the connecting surface (3) and is open towards the end of the connecting element (2).

10. A device according to one of claims 1 to 9 characterised in that a plurality of receiving pockets (5) are arranged in succession in the direction of insertion of the connecting element (2).

11. A device according to claim 10 characterised in that the receiving pockets (5) are of a scale-like, corrugated or similar structure, wherein the projections formed in the scale-like structure between the receiving pockets (5) face in opposite relationship to the direction of insertion.

12. A device according to one of claims 1 to 11 characterised in that disposed in the connecting element (2) is a transversely extending pin (9) which opens into the receiving pocket (5) and which is axially displaceable into the receiving pocket (5) from the side remote therefrom.

13. A device according to one of claims 1 to 12 characterised in that the adhesive (4) is formed by a one-component system reacting at ambient temperature, in particular a system which cross-links under the effect of moisture or a solvent-bearing system or an anaerobic system or a cyanoacrylate-bearing system.

14. A device according to one of claims 1 to 12 characterised in that the adhesive (4) is formed by a two-component system reacting at ambient temperature, in particular an epoxy or PUR-system with a variable mixing ratio.

15. A device according to one of claims 1 to 12 characterised in that the adhesive (4) is formed by a hot-hardening epoxy foil or a micro-encapsulated adhesive or an acrylate system or a hot adhesive.

16. A device according to one of claims 1 to 15 characterised in that the adhesive pad (6) has a plastics sheathing.

17. A device according to one of claims 1 to 16 characterised in that the adhesive pad ( 6) is of a wedge-shaped cross-sectional shape which increases in size in the direction of insertion of the connecting element (2).

18. A device according to claim 16 or claim 17 characterised in that the adhesive pad (6) has an intermediate foil (11) separating the two components of a two-component adhesive.

19. A device according to claim 18 characterised in that the intermediate foil (11) has circular or comb-like zones (12) which permit or faciliate the transfer of adhesive.

20. A device according to one of claims 1 to 14 characterised in that the adhesive pad (6) is formed by a felt impregnated with the adhesive (4).

21. A device according to one of claims 1 to 14 characterised in that the adhesive (4) is applied to an aluminium foil forming a carrier.

22. A device according to one of claims 1 to 14 characterised in that the adhesive (4) can be heated up by an electric current flow.

23. A device according to claim 22 characterised in that a heating wire core (13) is arranged in the adhesive (4).

24. A device according to one of claims 1 to 19 characterised in that the adhesive pads (6) are arranged in pluralities in square form on a common carrier foil spaced by severable connecting webs (14).

25. A device according to claim 24 characterised in that to receive a two-component adhesive the intermediate foil (11) extends in the adhesive pads (6) in the plane of the carrier foil.

26. A device according to claim 24 characterised in that to receive a two-component adhesive the adhesive pads (6) are filTed alternately with the one and the other component (A, B) of the adhesive.

27. A device according to one of claims 1 to 15 in which the connecting element (2), in particular the corner connector, is formed by cutting to length suitably shaped bar material, characterised in that the adhesive (4) is already applied to the bar material before the operation of cutting it to length.

## Revendications

1. Dispositif pour assembler des profilés creux (1) de préférence en métal, également en forme de tubes, notamment pour fabriquer des cadres de fenêtres, de portes, de façades et similaires, comportant un élément de liaison (2) qui pénètre dans les profilés creux (1), notamment une équerre d'assemblage, qui présente sur une ou plusieurs de ses surfaces de liaison (3) en contact intérieurement avec les profilés creux (1) à assembler une zone pourvue d'un adhésif, caractérisé par le fait que l'élément de liaison (2), sur ses surfaces de liaison (3) à coller, est pourvu de cavités réceptrices (5) pour l'adhésif (4), dans lesquelles l'adhésif (4) est disposé en tant que coussin d'adhésif (6) appliqué sur un support ou encapsulé lors du montage de l'élément de liaison (2), les cavités réceptrices (5) s'étendant transversalement à la direction d'emboîtement de l'élément de liaison (2).

2. Dispositif selon la revendication 1, caractérisé par le fait que la cavité réceptrice (5) s'étend des deux côtés jusqu'au bord de la surface de liaison (3).

3. Dispositif selon la revendication 1 ou 2, caractérisé par le fait que l'adhésif (4) est disposé avec complémentarité de formes dans la cavité réceptrice (5) et affleure avec la surface de liaison (3) ou dépasse par rapport à celle-ci.

4. Dispositif selon une des revendications 1 à 3, caractérisé par le fait que les bords de la cavité réceptrice (5) qui s'étendent transversalement à la direction d'emboîtement de l'élément de liaison (2) sont usinés en contre-dépouille.

5. Dispositif selon une des revendications 1 à 4, caractérisé par le fait que la cavité réceptrice (5) présente en section transversale de forme essentiellement circulaire.

6. Dispositif selon une des revendications 1 à 4, caractérisé par le fait que la cavité réceptrice (5) est conformée en cuvette plate.

7. Dispositif selon la revendication 6, caractérisé par le fait que la cavité réceptrice (5), au niveau de son bord avant dans la direction d'emboîtement présente une rainure (7) pour l'accrochage du coussin d'adhésif (6) ou d'une barrette support (8) portant le coussin d'adhésif (6).

8. Dispositif selon la revendication 7, caractérisé par le fait que la rainure (7), en section transversale, a une forme arquée.

9. Dispositif selon la revendication 7, caractérisé par le fait que la rainure (7) est agencée sous la forme d'une fente orientée parallèlement à la surface de liaison (3) et débouchant dans la face frontale de l'élément de liaison (2).

10. Dispositif selon une des revendications 1 à 9, caractérisé par le fait que plusieurs cavités réceptrices (5) sont disposées les unes derrière les autres dans la direction d'emboîtement de l'élément de liaison (2).

11. Dispositif selon la revendication 10, caractérisé par le fait que les cavités réceptrices (5) présentent une structure en forme d'écaille, d'onde ou similaire, les saillies formées entre les cavités réceptrices (5) dans la structure en écaille étant opposées à la direction d'emboîtement.

12. Dispositif selon une des revendications 1 à 11, caractérisé par le fait qu'une goupille (9) qui s'étend transversalement et débouche dans la cavité réceptrice (5) est disposée dans l'élément de liaison (2), laquelle goupille peut être enfoncée axialement dans la cavité réceptrice (5) depuis le côté opposé à cette dernière.

13. Dispositif selon une des revendications 1 à 12, caractérisé par le fait que l'adhésif (4) est formé d'un système mono-composant qui réagit à la température ambiante, notamment d'un système qui réticule en présence d'humidité ou d'un système contenant des solvants ou d'un système anaérobie ou d'un système à base de cyano-acrylates.

14. Dispositif selon une des revendications 1 à 12, caractérisé par le fait que l'adhésif (4) est formé d'un système bi-composant qui réagit à la température ambiante, notamment d'un système à base d'époxydes ou d'un système à base de PUR avec un rapport de mélange variable.

15. Dispositif selon une des revendications 1 à 12, caractérisé par le fait que l'adhésif (4) est formé d'un film époxy durcissant à chaud ou d'un adhésif en micro capsules ou d'un système à base d'acrylates ou d'une colle à chaud.

16. Dispositif selon une des revendications 1 à 15, caractérisé par le fait que le coussin d'adhésif (6) présente une enveloppe en matière plastique.

17. Dispositif selon une des revendications 1 à 16, caractérisé par le fait que le coussin d'adhésif (6) présente une section en forme de coin qui s'élargit dans la direction d'emboîtement de l'élément de liaison (2).

18. Dispositif selon la revendication 16 ou 17, caractérisé par le fait que le coussin d'adhésif (6) présente un film intermédiaire (11) qui sépare les deux composants d'un adhésif bi-composant

19. Dispositif selon la revendication 18, caractérisé par le fait que le film intermédiaire (11) présente des zones (12) en forme de cercles ou en forme de peigne qui permettent ou favorisent la sortie de l'adhésif.

20. Dispositif selon une des revendications 1 à 14, caractérisé par le fait que le coussin d'adhésif (6) est formé d'un feutre imprégné de l'adhésif (4).

21. Dispositif selon une des revendications 1 à 14, caractérisé par le fait que l'adhésif (4) est appliqué sur une feuille d'aluminium qui forme un support.

22. Dispositif selon une des revendications 1 à 14, caractérisé par le fait que l'adhésif (4) peut être chauffé électriquement.

23. Dispositif selon la revendication 22, caractérisé par le fait qu'une âme de fils chauffants (13) est disposée dans le coussin d'adhésif (6).

24. Dispositif selon une des revendications 1 à 19, caractérisé par le fait que les coussins d'adhésif (6) sont disposés à plusieurs en carré sur une feuille support commune et sont espacés par des bandes de liaison (14) séparables.

25. Dispositif selon la revendication 24, caractérisé par le fait que pour recevoir un adhésif bi-composant, le film intermédiaire (11) dans les coussins d'adhésif (6) s'étend dans le plan de la feuille support.

26. Dispositif selon la revendication 24, caractérisé par le fait que pour recevoir un adhésif bi-composant, les coussins d'adhésif (6) sont remplis alternativement avec l'un et avec l'autre des composants (A, B) de l'adhésif.

27. Dispositif selon une des revendications 1 à 15 dans lequel l'élément de liaison 2, notamment l'équerre d'assemblage est formé par découpe à la longueur d'un produit en barre formé en conséquence, caractérisé par le fait que l'adhésif (4) est appliqué sur le produit en barre avant la coupe à la longueur de celui-ci.
